# EUROPEAN PATENT APPLICATION

(11) **EP 1 726 848 A2**
(43) Date of publication of application: **29.11.2006**
(21) Application number: 06005610.8
(22) Date of filing: 20.03.2006
(51) Int. Cl.: F16H 7/08

(54) **Tensioner for simultaneously tensioning multiple strands**

(30) Priority: 27.05.2005 US 139837
(71) Applicant: BorgWarner Inc., Auburn Hills MI 48326 (US)
(72) Inventor: Markley, George L., Montour Falls New York 14865 (US); Monks, Donald M., Corning New York 14830 (US)
(74) Representative: Petruzziello, Aldo

(57) **Abstract**

A tensioner system imparting tension to a chain (300) comprising a pair of tensioner arms (308a,308b), at least one link piece (318a,318b) and a tensioner. The pair of tensioner arms have a pivoting end (330a,330b) for rotation about a fixed pin (306a,306b), a link end (332a,332b), and a shoe with a chain sliding face. At least one link piece (318a,318b) has a first end pivotally attached to the link end (332a,332b) of each of the tensioner arms (308a,308b). The tensioner has a housing (320) for receiving a piston (324) with an end (324a) in contact with a pin (316) that joins the second end of the link pieces (318a,318b) together. When the piston of the tensioner is biased outwards from the housing, the end of the piston contacts the pin joining the link pieces of the tensioner arms, moving the tensioner arm toward a chain centerline and tensioning the chain equally on both sides.

## Description

### BACKGROUND OF THE INVENTION

### FIELD OF THE INVENTION

The invention pertains to the field of tensioners. More particularly, the invention pertains to a tensioner that simultaneously tensions multiple strands of the chain.

### DESCRIPTION OF RELATED ART

Chain tensioners in engines are used to control the power transmission chains as the chain travels around a plurality of sprockets. The slack of the chain varies as the temperature in an engine increases and as the chain wears. When a chain wears, the chain elongates and the slack in the chain increase. The increase in slack may cause noise, slippage, or tooth jumping between the chain and the sprocket teeth. If the increase of the slack of the chain is not taken up, by a tensioner for example in an engine with a chain driven camshaft, the engine may be damaged because the camshaft timing is misaligned by several degrees due to slippage or tooth jumping.

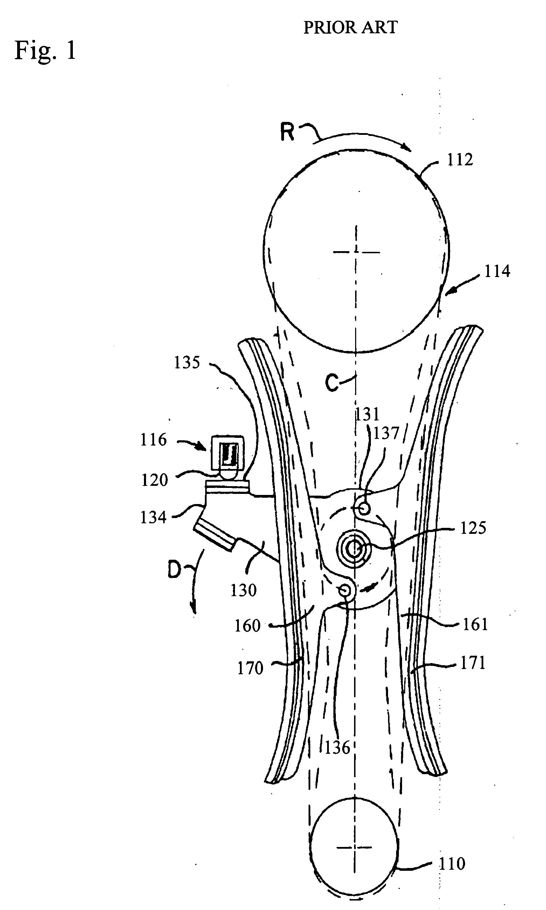

An example of a tensioner that tensions multiple strands is US Patent No. 6,322,470. A chain 114 is wrapped around a drive sprocket 110 and a driven sprocket 112 as shown in prior art Figure 1. The tensioner system includes a pivoting lever 130 which carries a pair of arms 160, 161 with shoes 170, 171. The pivoting lever 130 has first end 131 that is circular and aligned along a centerline C between the strands of the chain. The pivoting lever 130 pivots 125 in a counterclockwise direction D about the first end 131. The second end 134 of the pivoting lever 130 extends outside of the chain strands and has a contact surface 135 that extends perpendicular to the lever 130 and receives a plunger 120 of an actuator 116. The arms 160, 161 are fixedly attached to lever 130 by pins 136, 137 slightly left and right of the centerline respectively. Movement of the lever 130 causes the fixed pins 136, 137 to move equally in the lateral direction. During operation, the plunger 120 moves the second end 134 of the lever 130 in direction D and pivots about pin 125, which causes a counterclockwise movement of the first end 131 of the lever 130. The fixed pins 136, 137 pull the arms 160, 161 with shoes 170, 171 laterally toward the chain centerline C, and into contact with the outside portion of the strands of the chain. The chain is tightened from both sides equally.

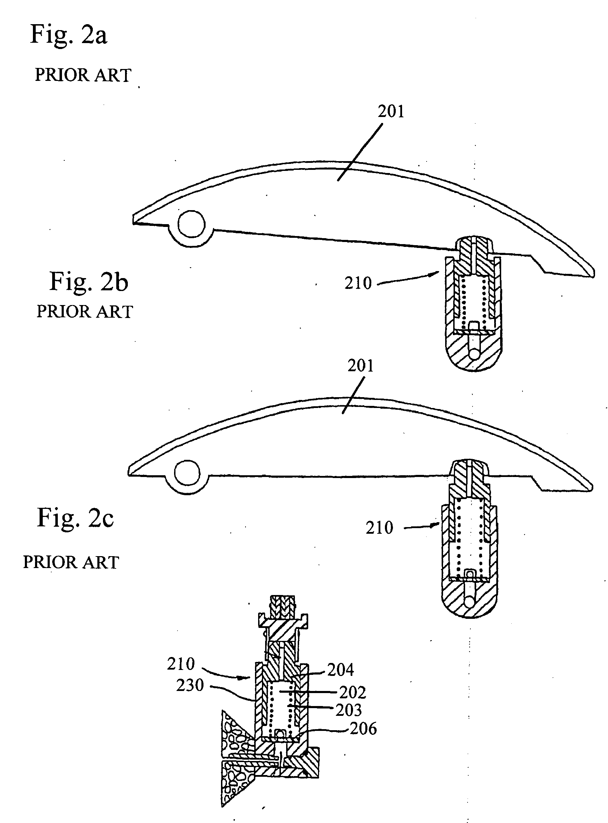

Figure 2a shows the tensioner 210 of US Patent No. 6,312,351 in the retracted position biasing a blade arm 201. Figure 2b shows the tensioner 210 in an extended position biasing a blade arm 201. Figure 2c shows the tensioner 210. Oil is introduced to a chamber 202 formed between the piston 204 and the housing 230 through a check valve 206. The oil in the chamber 202 and a spring 203 bias the piston 204 to protrude from the housing 230 and bias the blade arm 201. The housing 230 is pivotally connected to the engine block.

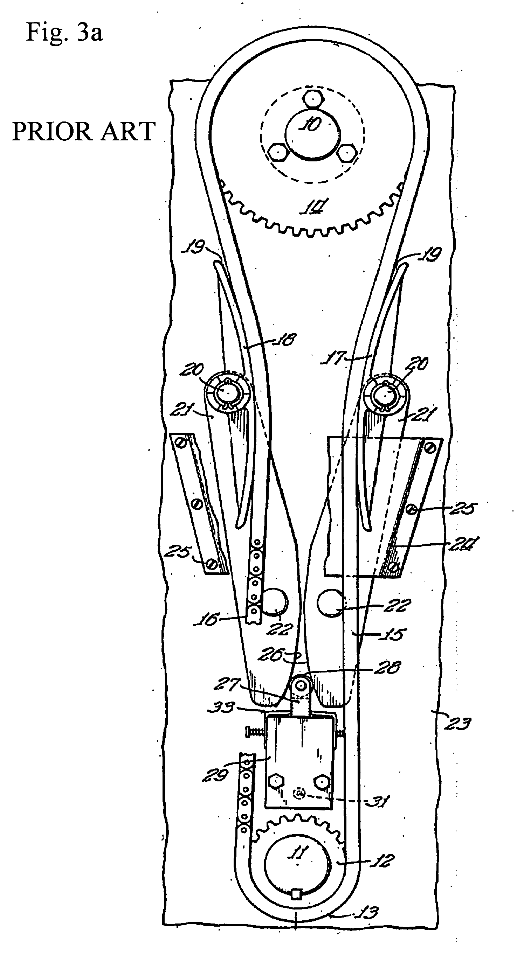

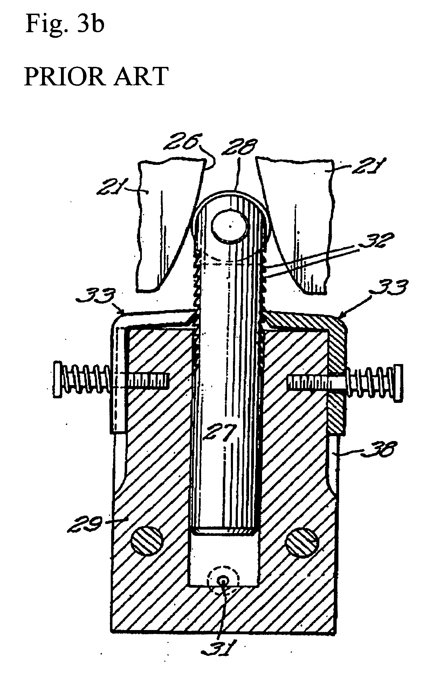

Figure 3a shows a tensioner from US Patent No. 2,210,276. A chain 13 is wrapped around a crankshaft sprocket 12 mounted on the crankshaft 11 and a camshaft sprocket 14 mounted on the camshaft 10. The chain has a drive stretch 15 and a slack stretch 16. A pair of chain followers or shoes 17, 18 with chain engaging surfaces 19, engage the stretches 15, 16. The shoes 17, 18 are pivoted at point 20 to the upper ends of levers 21 which are pivoted at point 22 to the engine block 23. A guide yoke 24 secured to the engine block 23, is arranged at the upper end of levers 21 to retain them in the proper plane of movement. The lower ends of the levers 21 have cammed surfaces 26. The levers 21 may pivot about points 22 such that the shoes 17, 18 are moved toward each other by a fluid motor comprising a piston 27, the upper end which carries a roller 28 that engages the cammed surfaces of the levers 21. The piston fits in a cylinder 29 and is biased outwards by oil from the oil port 31. When oil pressure drops to zero, the oil pressure supporting the piston is withdrawn, and pawls 33 positioned in channeled grooves 38 of the cylinder 29 engage ratchet teeth 32 on the piston 27 as shown in Figure 3b. The chain followers 17, 18 and levers 21 are not directly connected to each other.

US Patent No. 2,129,107 discloses a tensioner for a chain with two arms biasing the chain inwards. Each arm includes a metallic element and a shoe. One end of the arm is pivotally attached to a linkage piece, which is pivotally attached to the engine frame. The opposite end of the arm is biased by a hydraulic shoe positioning member. The two arms are not directly connected to each other.

US Patent No. 5,702,318 discloses a pair of levers that are interconnected and fixed at one end to the same rotatable base. One of the levers has a convexly curved surface that touches the internal portion of one strand of the chain and is biased by a tensioner. The other lever is also convexly curved and is disposed on the external side of the same strand of the chain. Any force from the tensioner imparted on the first lever also moves the second lever.

US Patent Application Publication No. 2003/0153420 discloses a tensioner with two arms coupled at a first end to a resilient drive and at a second end to a rotatable pulley. The arms are positioned within the pulley to maintain a constant angle between them. The first arm is positioned to form a negative differential angle with respect to the belt and the second arm is positioned to form a positive differential angle with respect to the belt.

### SUMMARY OF THE INVENTION

A tensioner system imparting tension to a chain comprising a pair of tensioner arms, at least one link piece, and a tensioner. The pair of tensioner arms have a pivoting end for rotation about a fixed pin, a link end, and a shoe with a chain sliding face. At least one link piece has a first end pivotally attached to the link end of each of the tensioner arms. The tensioner has a housing for receiving a piston having an end encompassing a pin that joins the second end of the link pieces together. When the piston of the tensioner is biased outwards from the housing, the end of the piston contacts the pin joining the link pieces of the tensioner arms, moving the tensioner arm toward a chain centerline and tensioning the chain equally on both sides.

A first angle is formed between the link pieces of the tensioner arms when the piston of the tensioner is retracted and a second angle, less than the first angle is formed between the link pieces of the tensioner arms when the piston of the tensioner is biased outwards from the housing.

The tensioner pivots about a shoulder bolt. The piston of the tensioner may be biased outwards from the housing by a spring or a spring plus hydraulic force. The tensioner is located within the strands of the chain between the driven and driving shafts and may be mounted on the chain centerline.

The link pieces are located outside of the strands of the chain and between the driving and driven shafts.

In an alternative embodiment, the tensioner is fixed to the engine block and has a piston with a flat end that contacts the pin joining the links of the opposing tensioner arms.

### BRIEF DESCRIPTION OF THE DRAWINGS

Fig. 1 shows a prior art tensioner that tensions both strands of the chain.
Fig. 2a shows a prior art tensioner in a retracted position biasing a blade arm 201, Fig. 2b shows the tensioner in an extended position biasing a blade arm, and Fig. 2c shows the tensioner.
Fig. 3a shows another prior art blade tensioner system. Fig. 3b shows the tensioner.
Fig. 4 shows a front view of the tensioner of the present invention with a new chain.
Fig. 5 shows a front view of the tensioner of the present invention with a worn chain.
Fig. 6 shows an isometric view of the tensioner with the near arm, face, and one linkage piece removed.
Fig. 7 shows an isometric view of the tensioner body, the piston pins and shoulder bolt which allows the tensioner body to be free to rotate.
Fig. 8 shows an isometric view of the tensioner.

### DETAILED DESCRIPTION OF THE INVENTION

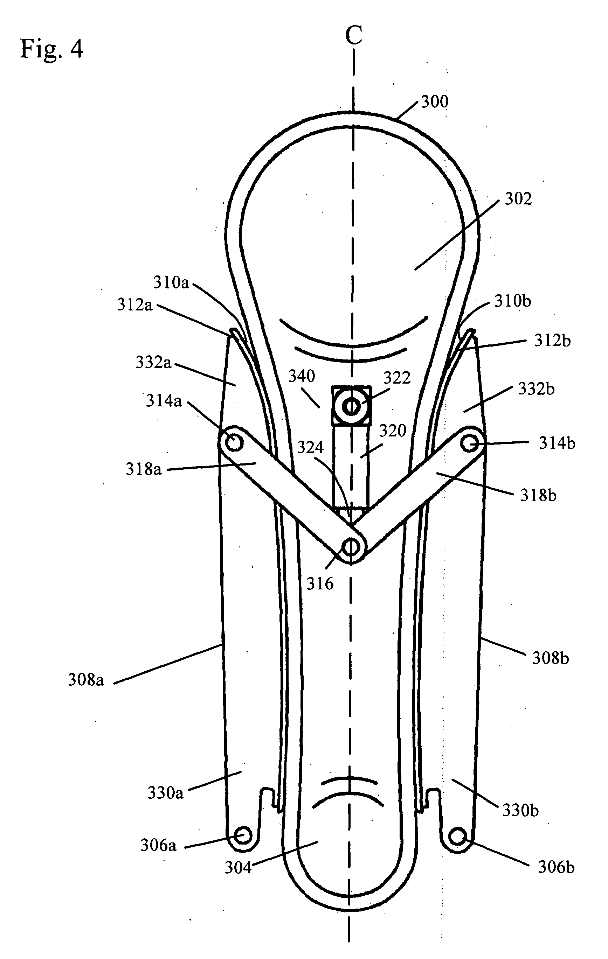

Figure 4 shows a new chain 300 wrapped around a drive sprocket 304 and driven sprocket 302 on a drive shaft and a driven shaft respectively. On the outside of both the tight strand the slack strand of the chain are tensioner arms 308a, 308b. The tensioner arms 308a, 308b each have a shoe 312a, 312b with a chain sliding surface 310a, 310b extending a significant length of the arm.

The tensioner arms have a pivoting end 330a, 330b for rotation about a fixed pin 306a, 306b and a link end 332a, 332b with a pin 314a, 314b for attaching one or two link pieces 318a, 318b that are free to rotate and are located outside the chain strands between the driving and driven sprockets 302, 304.

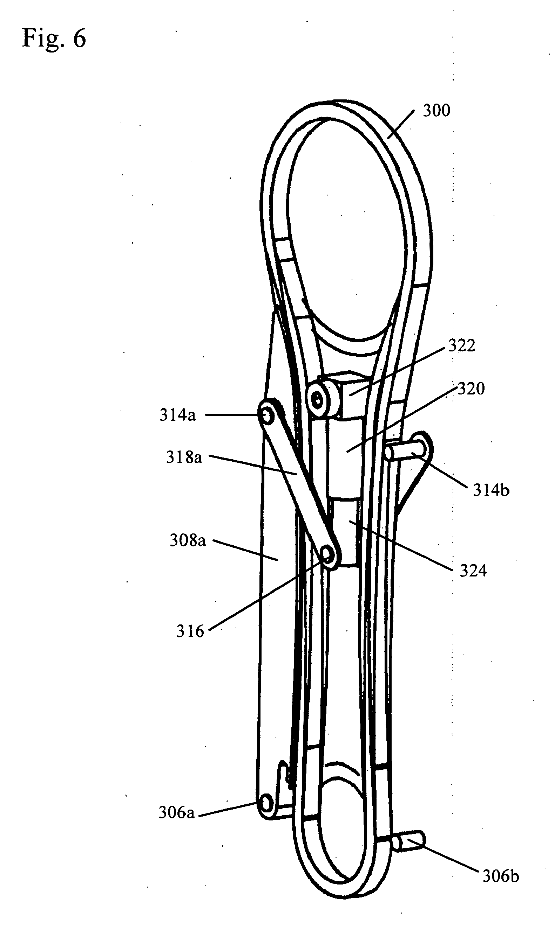

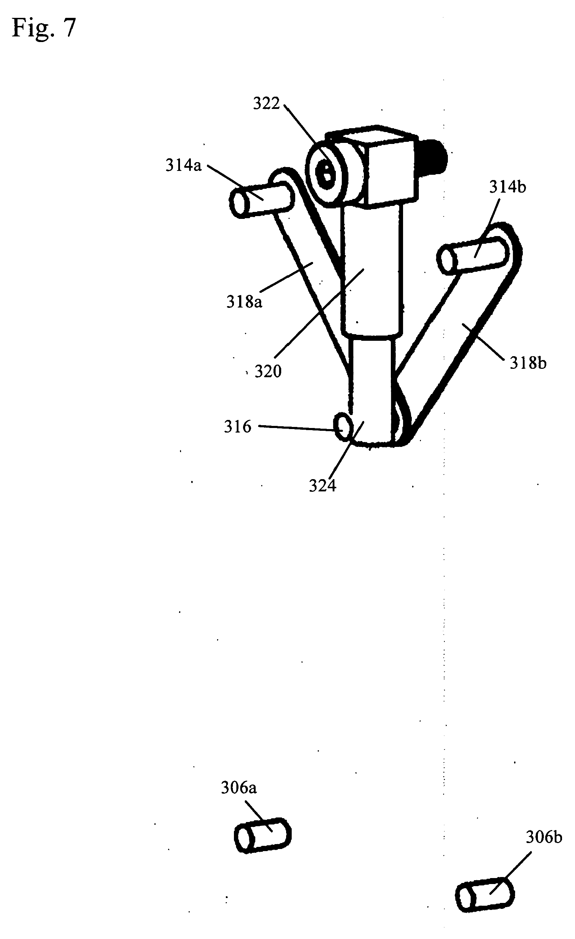

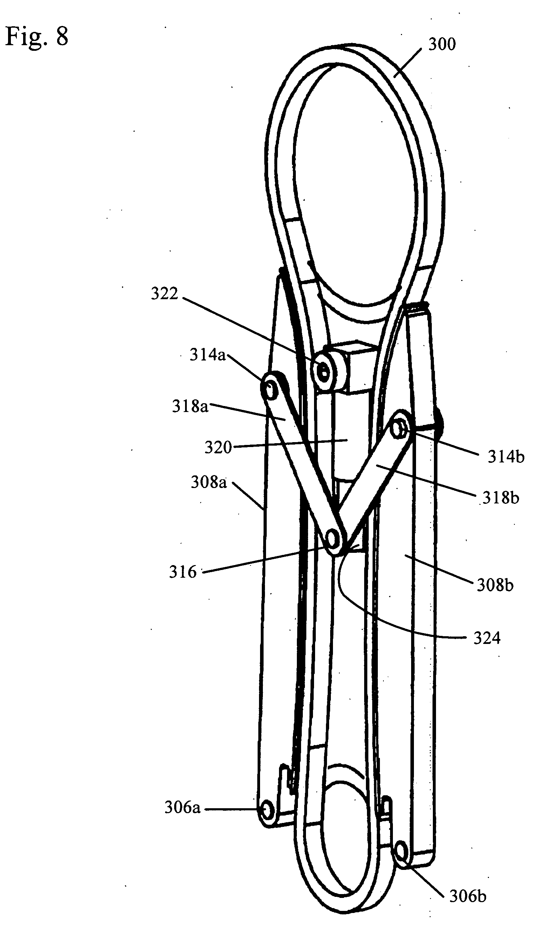

Inside the chain strands, and preferably on a chain centerline C, is a pivoting tensioner 340 shown in Figures 6-8, which pivots about a shoulder bolt 322 having a housing 320 with a piston 324 biased outwards from the housing 320 by a spring force (not shown) or hydraulic force in addition to spring force, similar to the tensioner shown in US 6,312,351, which is hereby incorporated by reference. The piston's 324 exposed end 324a has a pin 316 that joins the links 318a, 318b together, connecting the opposed tensioner arms 308a, 308b.

When the piston 324 is in a retracted position, a first angle is formed between the link pieces 318a, 318b of the opposing tensioner arms 308a, 308b and the tensioner arms 308a, 308b may or may not exert a tensioning force of the chain strands.

When the piston 324 extends outwards from the housing 320, a second angle is formed between the links 318a, 318b of the opposing tensioner arms 308a, 308b, less than the first angle when the piston 324 is in the retracted position, drawing the arms 308a, 308b together towards the chain centerline C, tensioning or squeezing the chain strands between the arms 308a, 308b equally and simultaneously. By linking the arms 308a, 308b together the vibrations of one chain strand is linked to the other chain strand and the vibrations are generally neutralized. By linking the arms 308a, 308b together to a single tensioning force 340, the force is divided equally between both arms 308a, 308b when the strands are equal. Since the arms 308a, 308b are connected, if one strand of the chain tightens, the other strand must slacken. The total tensioning force is applied to resist the tightening strand.

In an alternative embodiment, the pivoting tensioner 340 that pivots about a shoulder bolt 322 would be replaced with a fixed tensioner having a piston with a flat end that contacts the pin that joins the links of the opposing arms; allowing lateral movement of the pin without excessively thrust loading the piston.

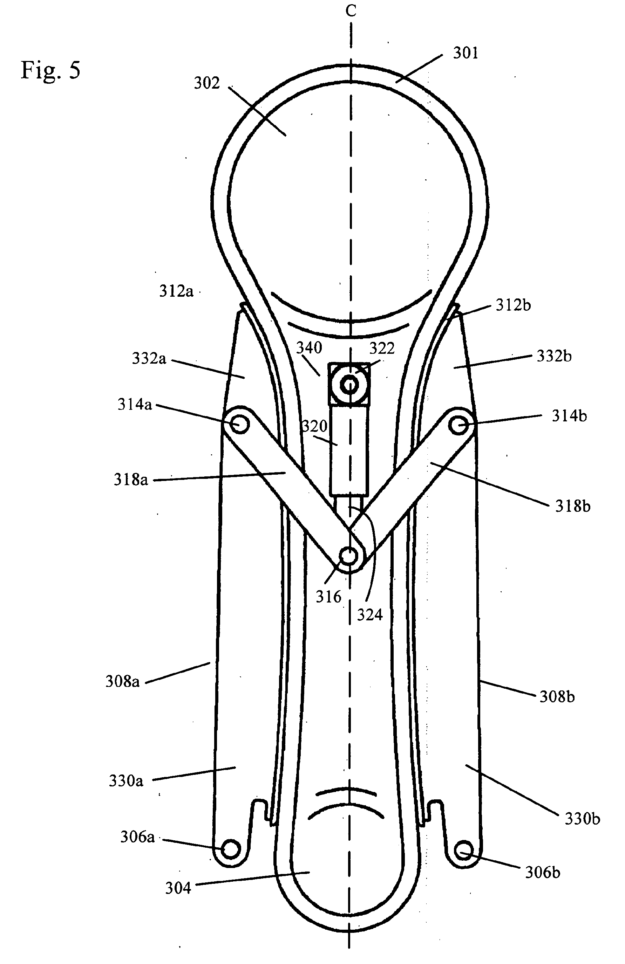

The chain tensioner system of the present invention also allows for the additional tensioning necessary to tension a worn, elongated chain 301 as shown in Figure 5. Since the arms 308a, 308b are connected and tensioning the chain strand is equal and simultaneous between the two arms 308a, 308b, the increase in chain length is equally absorbed in each chain strand, maintaining the timed relationship of the driving and driven sprockets 302, 304 throughout the life of the chain, eliminating the need to compensate for the change in sequential timing due to chain elongation and enhances the engine performance over its lifetime.

To tension the elongated, worn chain 301, the piston 324 of the tensioner 340 extends outwards from the housing 320 further, causing the opposing arms 308a, 308b to pull further in towards the chain centerline C and the tensioner 340, squeezing or tensioning the chain's elongated chain strands.

The chain centerline C is defined as a line spaced equidistant between the two strands of the chain.

Accordingly, it is to be understood that the embodiments of the invention herein described are merely illustrative of the application of the principles of the invention. Reference herein to details of the illustrated embodiments is not intended to limit the scope of the claims, which themselves recite those features regarded as essential to the invention.

## Claims

1. A tensioner system imparting tension to a chain that drivingly connects a driven shaft to a driving shaft in an engine, the tensioner system comprising:
a pair of tensioner arms each having a pivoting end for rotation about a fixed pin, a link end, and a shoe with a chain sliding face;
at least one link piece with a first end pivotally attached to the link end of each of the tensioner arms;
a tensioner having a housing for receiving a piston with an end in contact with a pin, the pin joining the second end of the link pieces pivotally attaching the tensioner arms together;
wherein when the piston of the pivoting tensioner is biased outwards from the housing, the end of the piston contacts the pin joining the link pieces of the tensioner arms, moving the tensioner arms toward a chain centerline and tensioning the chain equally on both sides.

2. The tensioner system of claim 1, wherein the piston of the tensioner is biased outwards by a spring.

3. The tensioner system of claim 1, wherein the piston of the tensioner is biased outwards by a spring and a hydraulic force.

4. The tensioner system of claim 1, wherein the tensioner is located within strands of the chain.

5. The tensioner system of claim 1, wherein the link pieces are outside strands of the chain and between the driving and driven shafts.

6. The tensioner system of claim 1, wherein the end of the piston is pivotally connected to the pin joining the link pieces together.

7. The tensioner system of claim 1, wherein the tensioner is mounted on the chain centerline.

8. The tensioner system of claim 1, wherein a first angle is formed between the link pieces of the tensioner arms when the piston of the tensioner is retracted and a second angle, less than the first angle is formed between the link pieces of the tensioner arms when the piston of the tensioner is biased outwards from the housing.

9. The tensioner system of claim 1, wherein the end of the piston is flat.

10. The tensioner system of claim 1, wherein the tensioner is fixed.

11. The tensioner system of claim 1, wherein the tensioner pivots.

12. A method of imparting tension to an elongated, worn chain comprising the steps of:
positioning a pair of tensioner arms on either side of the worn chain, the tensioner arms having a pivoting end for rotation about a fixed pin, a link end, and a shoe with a chain sliding face;
joining the tensioner arms to each other by at least one link piece with the first end pivotally attached to the link end of each of the tensioner arms;
mounting a pivoting tensioner between strands of the worn chain having a housing for receiving a piston with an end in contact with a pin, the pin joining the second end of the link pieces pivotally attaching the tensioner arms together;
biasing the piston of the pivoting tensioner outwards from the housing, such that the end of the piston contacts the pin joining the link pieces of the tensioner arms, moving the tensioner arms substantially towards a chain centerline, equally and simultaneously on both sides of the chain, tensioning the elongated and worn chain.

13. The method of claim 12, wherein the piston of the tensioner is biased outwards by a spring.

14. The method of claim 12, wherein the piston of the tensioner is biased outwards by a spring and a hydraulic force.

15. The method of claim 12, wherein the link pieces are outside strands of the chain and between driving and driven shafts.

16. The method of claim 12, wherein the tensioner is mounted on the chain centerline.
